# EUROPEAN PATENT SPECIFICATION

(11) **EP 1 829 600 B1**
(45) Date of publication and mention of the grant of the patent: **10.08.2011**
(21) Application number: 05847323.2
(22) Date of filing: 29.11.2005
(51) Int. Cl.: B01D 53/18, B01D 47/06, B01D 3/30

(54) **WHIRLING DEVICE FOR CARRYING OUT DOWNWARD PHASE CURRENT PHYSICO-CHEMICAL PROCESSES**
VERWIRBELUNGSVORRICHTUNG ZUR DURCHFÜHRUNG VON PHYSIKALISCH-CHEMISCHEN VERFAHREN IM ABWÄRTSPHASENSTROM
APPAREIL A TOURBILLONS DESTINE A EFFECTUER DES PROCESSUS PHYSICO-CHIMIQUES AVEC UN FLUX DE PHASES DESCENDANT

(30) Priority: 30.11.2004 RU 2004134710
(43) Date of publication of application: 05.09.2007
(73) Proprietor: Open Joint Stock Company Mineral and Chemical Company "Eurochem", Moscow 115054 (RU); Limited Liability Company "Promyshlennaya Ekologiya", Kazan, 420095 (RU)
(72) Inventor: MAKHOTKIN, Alexey Feofilaktovich, Kazan, 420015 (RU); KHALITOV, Rifkat Abdrakhmanovich, Kazan, 420120 (RU); SEDOV, Boris Sergeevich, deceased (RU); ERLYKOV, Vladimir Leonidovich, St.Petersburg, 357108 (RU); MAKHOTKIN, Igor Alekseevich, Kazan, 420111 (RU); SHARAFISLAMOV, Faiz Sharibzyanovich, Kazan, 420097 (RU); SHEIBAK, Sergei Arkadievich, Kingisepp, 188480 (RU); URIEVA, Valentina Ivanovna, Kingisepp, 188480 (RU); SHARIPOV, Airat Shamilievich, Kazan, 420139 (RU); KORCHAGIN, Boris Pavlovich, Kingisepp, 188480 (RU)
(74) Representative: Portal, Gérard
(86) International application number: PCT/RU2005/000606
(87) International publication number: WO 2006/059920

(56) References cited:
- RU-C1- 2 152 240
- RU-C1- 2 232 625
- US-A- 3 779 525
- US-A- 5 690 708

## Description

The invention relates to apparatuses for carrying out physical-chemical processes, such as absorption, desorption, powder purifying; drying, mixing and cooling of gases; and the invention can be suitably used in chemical, petrochemical industries and in metallurgy.

Known is hollow vortex apparatus with descending flow of the contacting phases, the cylindrical housing of which apparatus accommodates a swirler. Liquid is supplied into said apparatus along the axis via a wetter across the entire height, thereof and is discharged from the apparatus in its lower portion. An header for liquid is provided inside the swirler for additional wetting (see USSR Inventor's Certificate No. 1346209, cl. B 01 D 47/06, Bulletin No. 39, 23.10.1987). Liquid and gas move in said apparatus in the descending flow in the gravity direction, and liquid is atomized by mechanical means, without any energy loss of the gas flow.

A disadvantage of said apparatus is its low efficiency, since a liquid is delivered into a separation zone of the apparatus.

In terms of the technical essence and achieved results the most pertinent prior art is a vortex apparatus for carrying out physical-chemical processes with descending flow of phases, comprising: a housing, vortex contact device (VCD) of a convex shape including a separator, tangential plates and trays; a tangential gas inlet pipe, pipes for delivery and discharge of phases. Over the vortex contact apparatus positioned is a disklike-cylindrical wetter. The housing lower portion is provided with an exhaust pipe (see RU Patent No. 2232625, cl. B 01 D 47/06, B 04 C 3/00. Bulletin No. 20, 20.07.2004).

Gas flow enters an upper portion of said apparatus through the tangential pipe, and a preliminary whirl is imparted to said flow therein. Liquid, via the disklike-cylindrical wetter, is supplied to an outer upper portion of the VCD plates and flows down along said plates. Gas, passing through slots defined by the tangential plates, swirls with increasing speed, detaches the liquid off the plates' surface, and disperses the liquid. On an inner surface of VCD defined is the rotating highly-turbulized liquid layer of droplets, which layer contacts the new incoming portions of the gas flow. The heat exchange/mass transfer, in the main, occurs under these circumstances. When the phases descend in a single direction, gas flow energy is mainly spent only to disperse liquid, and energy spent to conveying liquid is minimal, which contributes to decreasing hydraulic losses. Such a design of the vortex apparatus, improves efficiency of heat exchange/mass transfer, with a small hydraulic resistance. A disadvantage of this apparatus is a low efficiency of heat exchange/mass transfer at high flow rates of gas and liquid phases. Flow rates of a gas and liquid being high, a time of contact between the phases becomes shorter, and a surface of said contact is reduced. This reduces efficiency of the process.

The object of this invention is to develop a vortex apparatus for carrying out various physical-chemical processes, which apparatus will allow to extend time and increase a phase contact surface, improve efficiency of heat exchange/mass transfer at high flow rates of the gas and liquid phases, broaden a range of efficient operation of the apparatus.

Said object is attained by a vortex apparatus with descending flow of phases, for carrying out art physical-chemical processes as defined in claim 1.

In said apparatus, a separator is made in the form of a truncated cone shell, a diameter of a lower cut of which shell being 0.75-0.9 of the vortex contacting device's inner diameter.

A number of vortex contact devices may be 1-3 devices, a distance between the upper base of the vortex contact device and the lower cut of the separator of the overlying vortex contact device being 0.3-1.0 of the vortex contact device's inner diameter.

An advantage of the claimed apparatus is that the horizontal disklike partitions, positioned along the height of the vortex contacting device's tangential plates, make it possible to subdivide the gas flow entering the VCD into several flows, whereby the flow rate mass ratio of the gas and liquid phases in each flow grows, which circumstance facilitates to extend time and increase a surface of the phases contact. The arrangement of the horizontal disklike partitions and the vortex contact device's upper base in the area where the tangential plates with the annular slots are secured, allows to ensure a continuous liquid curtain between the VCD's tangential plates said curtain being situated before entering fresh portions of the gas-liquid flow. Positioning the annular beads on the outer and inner cuts of the disklike partitions, and also on the upper cut of the vortex contact device's upper base makes it possible to distribute to liquid such that it is subdivided into a number of flows of the main portion of said liquid that flows down through the annular slots, and of the remaining portion thereof that flows over the annular beads. With this arrangement, a number of liquid curtains are formed, through which curtains the gas-liquid flow passes. Truncated cone arrangement of said separator allows to increase thickness of the falling liquid layer, and improve efficiency of mass transfer selection of separator's lower cut diameter in a value being 0.75-0.9 of the vortex contact device's inner diameter is determined by the state of free effluence of the swirled gas-liquid flow out of the separator. Within such ratio of dimensions liquid flows down uniformly over the whole perimeter of the separator and a film of liquid has the same thickness over the while perimeter of the separator if the value of diameter of the separator's lower cut is less than 0.75 of the vortex contact device's inner diameter, hydraulic resistance of the apparatus grows because of a decreasing free section for exiting gas flow. If the value of diameter of the separator's lower cut exceeds 0.9 of the vortex contact device's inner diameter the portion of the liquid flow going down into the annular space between the VCD and the apparatus shell becomes larger, which results in worse efficiency of heat exchange/mass transfer.

Increasing the number of the vortex contact devices in the claimed apparatus from 1 to 3 devices results in an improved efficiency of the heat exchange/mass transfer processes owing to prevention of any skips of gas without interaction with liquid when the gas-liquid flow passes through the vortex contact devices.

Selecting the distance between the vortex contact device's upper base and the lower cut of the overlying vortex contact device's separator within the limits of 0.3-1.0 of the vortex contact device's inner diameter is caused by hydraulic resistance and by conditions of downward flow of the swirled gas-liquid flow out of the separator onto the underlying vortex contact device. Within said ratio, entire liquid flows out of the separator onto the underlying VCD's upper base in the form of a continuous curtain, the gas flow passing through said liquid curtain and arriving on the underlying portion. If that distance is less than 0.3 of the vortex contact device's inner diameter, then hydraulic resistance in the apparatus grows; and if that distance exceeds 1.0 of the vortex contact device's inner diameter, then effectiveness of interaction of the phases deteriorates due to discontinuity of the falling liquid layer and due to the fact that gas skips without any contact with liquid.

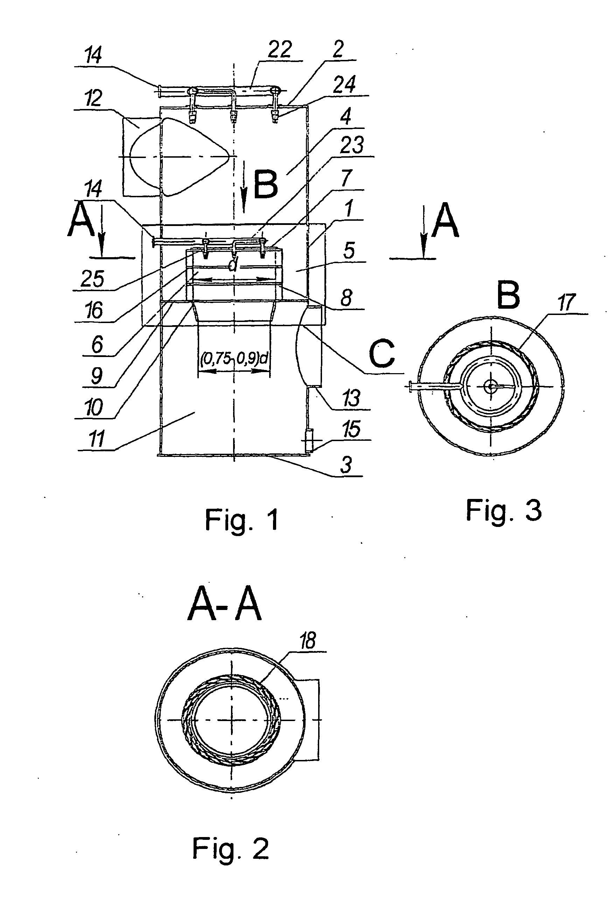

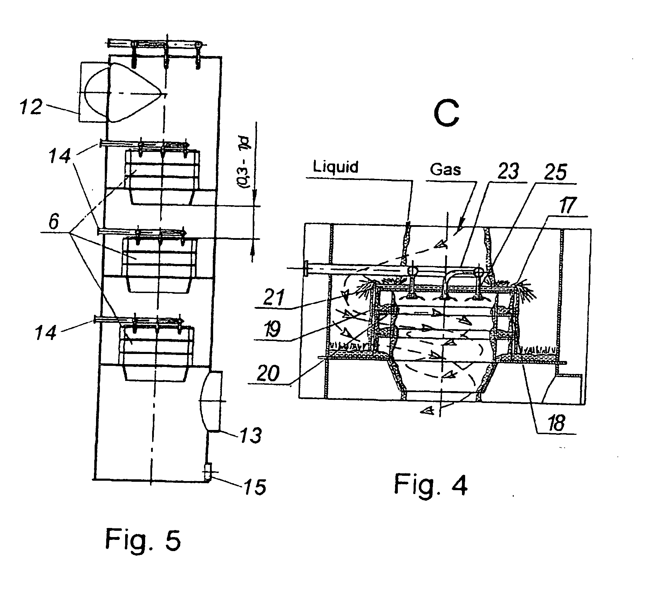

The invention will be further explained with reference to the accompanying drawings wherein: Fig.1 shows a longitudinal section of the claimed vortex contact device; Fig. 2 - a section along A-A line; Fig. 3 - view B; Fig. 4 - view C; Fig. 5 - a longitudinal section of the vortex apparatus having 3 vortex contact devices.

The claimed vortex apparatus with descending flow of phases includes: a housing 1, a lid 2, a bottom 3, a mixing zone 4, a swirling zone 5 having vortex contact device 6 that comprises: an upper base 7, tangential plates 8, a tray 9, a separator 10, a separating zone 11, pipes 12 and 13 for inlet and outlet of gas, respectively pipes 14 and 15 for delivery and discharge of liquid respectively. Along a height of the vortex contact device's tangential plates positioned are horizontal disklike partitions 16. Said disklike partitions and the vortex contact device's upper base have annular slots 17 and 18 in the area where the tangential plates are secured. Annular beads 19, 20 and 21 are mounted on the outer and inner cuts of the horizontal disklike partitions as well as on the outer cut of the vortex contact device's upper base. Distributors 22 and 23 of liquid having nozzles 24 and 25 are positioned on the apparatus lid and on the swirler's upper base. The separator is in the form of the shell truncated cone, the lower cut diameter of which shell being 0.75 - 0.9 of the vortex contacting device's inner diameter. In case of the multi-stage arrangement of the apparatus, a number of the vortex contact devices is 1-3 devices, a distance between the vortex contact device's upper base and the lower cut of the overlying vortex contact device's separator being 0.3-1.0 of the vortex contact device's inner diameter.

Operation of the claimed vortex apparatus with descending flow of phases is further explained by the example of absorption of sulphur trioxide under production of sulphuric acid. This process is characterized by a high flow rate of the gas phase (G = 40-260) 10³ m³/h, the mass ratio of liquid flow rate (L) gas flow rate (G) being L/G = 8-10. The flow rate of liquid (sulphuric acid) significantly exceeds that of the gas phase.

Gases comprising 7-14% of sulphur trioxide at 280°C enter, via tangential pipe 12, the mixing zone 4 of the apparatus, and rotary motion is imparted to said gases. Liquid (sulphuric acid) is delivered into the liquid distributor 22, and is atomized by nozzles 24 into the form of fine-dispersed droplets in the gas flow. The swirled gas flow in the mixing zone is mixed with the fine-dispersed droplets of liquid. A part of the atomized droplets of the liquid precipitates on the vortex contact device's upper base. The main part of the precipitated liquid flows down through an annular slot 17 on the underlying disklike partition 16, thus forming the liquid curtain. The remaining part of the liquid flows over an annular bead 21 and flows down along an outer surface of the vortex contact device 6, also forming the liquid curtain thereby. The gas-liquid flow passes through two liquid curtains. When the gas flow passes between tangential plates 8, it is subdivided into a number of flows by disklike partitions 16. As this occurs, each of said gas flows interacts with the wetting liquid that flows down through the annular slots 17 of the upper base 7 of the vortex contact device and through the annular slots 18 of the disklike partitions, that allows to extend time and increase surface of the contact between the gas and liquid phases. Afterwards, the swirled gas flow with dispersed sulphuric acid enters inside the swirler through the slots formed by the VCD's tangential plates. As the gas-liquid flow exits from the slots, the rotary motion is imparted thereto. The rotating highly-turbulized gas-liquid flow is formed on the inner surface of the vortex contact device, which flow is continuously wetted by droplets of liquid atomized by nozzles 25 positioned on the swirler's upper base, and also contacts the new incoming portions of the gas flow. The rotating gas flow with dispersed sulphuric acid moves within the descending flow inside the swirler. Movement of liquid dispersed by the nozzles is patterned such that liquid brings about fine-dispersed volume of the liquid droplets at each vortex stage, in which volume SO₃ is intensively absorbed. As the liquid droplets impact on one another and as said droplets impinge on the swirlers' plates, the phase contact surface is repeatedly renewed, and a degree of absorption of sulphur trioxide is increased. The rotating gas-liquid flow, via separator 10, enters the absorber lower part, into the zone of separation of the gas and liquid phases. At this point, the gas flow passes through the liquid curtain that flows down out of the separator. The liquid, that has been separated from the gas flow, is discharged from the apparatus via pipe 15. The gas phase, that has been separated from the liquid droplets, is discharged out of the apparatus via pipe 13.

Absorption of sulphur trioxide is accompanied by the chemical reaction, whereby a significant amount of heat is released. To increase a rate and degree of absorption of sulphur trioxide, temperature of the gas and liquid phases must be lowered. High flow rate of a liquid, and effective mixing of the gas-liquid flow in the vortex contact device increases intensity of heat exchange/mass transfer to the maximum. In the three-stage arrangement of movement of a liquid and a gas flow through three vortex contact devices, a rate and degree of absorption of sulphur trioxide will increase. Intensive multi-stage mixing of the liquid phase when it travels downwards across the vortex contact device will prevent any local overheating of sulphuric acid, will reduce misting of sulphuric acid, and will decrease a rate of corrosion of the apparatus.

Application of the claimed vortex apparatus for implementing physical-chemical processes, as compared with the most pertinent prior art, allows to extend time and increase a surface of contact of phases, under higher flow rates of the gas and liquid phases, and thereby broaden limits of steady operation, improve efficiency of the heat exchange/mass transfer processes, improve the operation reliability of the claimed apparatus, decrease volume and weight of the multi-stage apparatus.

## Claims

1. A vortex apparatus with descending flow of phases for carrying out physical-chemical processes, including: an in use vertically extending circular cylindrical housing (1) comprising a lid (2), a bottom (3), a gas inlet pipe (12) tangentially opening near the lid into the housing , a lower gas outlet pipe (13), liquid delivery pipes (14), a liquid outlet pipe (15) near the bottom, a vortex contact device (6) coaxially arranged inside the housing, the vortex contact device (6) having an horizontally extending circular upper base (7) the outer rim (21) of which is at a distance from the housing, the base being located below said gas inlet pipe, thereby defining a mixing zone (4) between said lid and said upper base, an annular tray (9) located below and extending parallel to the base, the outer rim of the tray being fixed to the housing, a plurality of plates (8) arranged tangentially with regard to the base and vertically extending between the base and the tray on which they are supported in such a way that passages result between the plates, a cone shaped separator (10) extending downwards and inwards from the inner rim of the annular tray; liquid distributors (22, 23) connected to the liquid delivery pipes and disposed on the lid and on the base, respectively, and being provided with nozzles (24, 25) extending through the lid into the housing and through the base into the vortex contact device, respectively, the vortex contact device further comprising a plurality of annular partition disks (16) extending parallel to the base and having outer rims (19) at a distance from the housing and inner rims (20), the partition disks and the base having circumferential annular slots (17, 18) in an area where the tangential plates (8) are secured.

2. A vortex apparatus with descending flow of phases for carrying out physical-chemical processes according to claim 1, **characterized in that** said separator (10) is in the form of a truncated cone shell, a diameter of a lower cut of said shell being 0.75-0.9 of an inner diameter of said vortex contact device (6).

3. A vortex apparatus with descending flow of phases for carrying out physical-chemical processes according to any of claims 1, 2, **characterized in that** a number of vortex contact devices (6) is 1 to 3, a distance between the upper base (7) of said vortex contact device (6) and the lower cut of said separator (10) of an overlying vortex contact device (6) being 0.3-1.0 said inner diameter of said vortex contact device (6).

4. Use of said vortex apparatus as defined in anyone of claims 1 to 3, for absorption of sulphur trioxide under production of sulphuric acid.

5. The use of claim 4, wherein the gas phase (G) is at a high flow rate of G = 40-260.10³m³/h, the mass ratio liquid flow rate (L) to gas flow rate (G) being L/G = 8-10.

6. The use of claim 5, wherein the entering gas comprises 7-14% of sulphur trioxide at 280°C and the liquid is sulphuric acid delivered into the liquid distributor (22), atomized by nozzles (24), into the form of fine-dispersed droplets in the gas flow, thereby having a swirled gas flow in the mixing zone (4) mixed with the fine-dispersed droplets of liquid ; and a part of the atomized droplets of the liquid (L) precipitate on the contact device's upper base (7) whereas the main part of the precipitated liquid flows down through an annular slot (17) on horizontal annular partition disks (16), thus forming a liquid curtain ; and a remaining part of liquid flows over an annular bead (21) and flows down along an outer surface of the vortex contact device (6) also forming a liquid curtain thereby, so that the gas-liquid flow passes through two liquid curtains whereas when the gas flow passes between tangential plates (8), it is subdivided into a number of flows by partition disks (16).

## Patentansprüche

1. Wirbelvorrichtung mit absteigender Phasenströmung zum Ausführen von physikalisch-chemischen Prozessen, umfassend: ein bei Gebrauch sich vertikal erstreckendes kreiszylindrisches Gehäuse (1), das einen Deckel (2), einen Boden (3), ein Gaseinlaßrohr (12), welches sich in der Nähe des Deckels tangential in das Gehäuse öffnet, ein unteres Gasauslaßrohr (13), Flüssigkeitszufuhrrohre (14), ein Flüssigkeitsauslaßrohr (15) in der Nähe des Bodens, eine Wirbelkontaktvorrichtung (6), die koaxial im Gehäuse angeordnet ist, wobei die Wirbelkontaktvorrichtung (6) eine sich horizontal erstreckende kreisförmige obere Basis (7) erstreckt, deren Außenrand (21) sich in einem Abstand vom Gehäuse befindet, wobei sich die Basis unterhalb des Gaseinlaßrohres befindet, wodurch eine Mischungszone (4) zwischen dem Deckel und der oberen Basis definiert ist, eine kreisförmige Schale (9), die sich unterhalb der Basis befindet und sich parallel zur selben erstreckt, wobei der Außenrand der Schale am Gehäuse befestigt ist, mehrere Platten (8), die tangential zur Basis angeordnet sind und sich vertikal zwischen der Basis und der Schale erstrecken, auf der sie so abgestützt sind, daß sich Durchgänge zwischen den Platten ergeben, ein kegelförmiger Abscheider (10), der sich vom Innenrand der ringförmigen Schale nach unten und innen erstreckt; Flüssigkeitsverteiler (22, 23), die mit den Flüssigkeitszufuhrrohren verbunden und auf dem Deckel bzw. auf der Basis angeordnet sind und mit Düsen (24, 25) versehen sind, welche sich durch den Deckel bis in das Gehäuse bzw. durch die Basis in die Wirbelkontaktvorrichtung erstrecken, wobei die Wirbelkontaktvorrichtung ferner mehrere ringförmige Trennscheiben (16) umfaßt, die sich parallel zur Basis erstrecken und Außenränder (19) in einem Abstand vom Gehäuse und den Innenrändern (20) haben, wobei die Trennscheiben und die Basis am Umfang verlaufende, ringförmige Schlitze (17, 18) in einem Bereich haben, in dem die tangentialen Platten (8) befestigt sind.

2. Wirbelvorrichtung mit absteigendem Phasenstrom zum Ausführen von physikalisch-chemischen Prozessen nach Anspruch 1, **dadurch gekennzeichnet, daß** der Abscheider (10) die Form einer Kegelstumpfschale hat, wobei ein Durchmesser eines unteren Schnitts der Schale 0,75-0,9 eines Innendurchmessers der Wirbelkontaktvorrichtung (6) beträgt.

3. Wirbelvorrichtung mit absteigendem Phasenstrom zum Ausführen von physikalisch-chemischen Prozessen nach einem der Ansprüche 1 oder 2, **dadurch gekennzeichnet, daß** eine Zahl von Wirbelkontaktvorrichtungen (6) 1 bis 3 beträgt, wobei ein Abstand zwischen der oberen Basis (7) der Wirbelkontaktvorrichtung (6) und dem unteren Schnitt des Abscheiders (10) einer darüber angeordneten Wirbelkontaktvorrichtung (6) 0,3-1,0 des Innendurchmessers der Wirbelkontaktvorrichtung (6) beträgt.

4. Verwendung der Wirbelvorrichtung nach einem der Ansprüche 1 bis 3, zum Absorbieren von Schwefeltrioxid während des Erzeugens von Schwefelsäure.

5. Verwendung nach Anspruch 4, wobei die Gasphase (G) eine hohe Durchflußrate von G = 40-260 x 10³ m³/h aufweist, wobei das Massenverhältnis von Flüssigkeitsdurchflußrate (L) zur Gasdurchflussrate (G) L/G = 8-10 beträgt.

6. Verwendung nach Anspruch 5, wobei das eintretende Gas 7-14 % Schwefeltrioxid bei 280 °C umfaßt und die Flüssigkeit Schwefelsäure ist, die dem Flüssigkeitsverteiler (22) zugeführt, mittels Düsen (24) zerstäubt und in Form von fein verteilten Tröpfchen in den Gasstrom eingebracht wird, wodurch ein verwirbelter Gasstrom in der Mischungszone (4) entsteht, der mit den fein verteilten Flüssigkeitströpfchen vermischt ist; und ein Teil der zerstäubten Tröpfchen der Flüssigkeit (L) bei Kontakt der Tröpfchen mit der oberen Basis (7) der Vorrichtung ausfällt, während der Hauptteil der ausgefällten Flüssigkeit durch einen ringförmigen Schlitz (17) auf den horizontalen ringförmigen Trennscheiben (16) nach unten fließt und einen Flüssigkeitsvorhang bildet; und ein restlicher Teil der Flüssigkeit über einen ringförmigen Wulst (21) fließt und nach unten entlang einer Außenfläche der Wirbelkontaktvorrichtung (6) fließt und **dadurch** auch einen Flüssigkeitsvorhang bildet, so daß der Gas-Flüssigkeitsstrom durch zwei Flüssigkeitsvorhänge läuft, während er beim Durchlauf des Gasstroms zwischen den tangentialen Platten (8) in eine Reihe von Strömen durch die Trennscheiben (16) aufgeteilt ist.

## Revendications

1. Appareil à tourbillon avec écoulement descendant de phases destiné à réaliser des processus physico-chimiques, comprenant : un corps cylindrique circulaire (1) s'étendant verticalement en utilisation comportant un couvercle (2), un fond (3), un tuyau d'entrée (12) de gaz s'ouvrant tangentiellement près du couvercle dans le corps, un tuyau de sortie (13) de gaz inférieur, des tuyaux d'alimentation (14) en liquide, un tuyau de sortie (15) de liquide près du fond, un dispositif de contact (6) à tourbillon disposé coaxialement à l'intérieur du corps, le dispositif de contact à tourbillon (6) ayant une base supérieure circulaire (7) s'étendant horizontalement dont le rebord extérieur (21) est à une distance du corps, la base étant située sous ledit tuyau d'entrée de gaz, en définissant ainsi une zone de mélange (4) entre ledit couvercle et ladite base supérieure, un plateau annulaire (9) situé sous et s'étendant parallèlement à la base, le rebord extérieur du plateau étant fixé sur le corps, une pluralité de plaques (8) disposées tangentiellement par rapport à la base et s'étendant verticalement entre la base et le plateau sur lesquels elles sont supportées d'une manière telle qu'il en résulte des passages entre les plaques, un séparateur en forme de cône (10) s'étendant vers le bas et vers l'intérieur depuis le rebord intérieur du plateau annulaire ; des distributeurs (22, 23) de liquide reliés aux tuyaux d'alimentation en liquide et disposés sur le couvercle et sur la base, respectivement, et qui sont pourvus de buses (24, 25) s'étendant à travers le couvercle dans le corps et à travers la base dans le dispositif de contact à tourbillon, respectivement, le dispositif de contact à tourbillon comportant en outre une pluralité de disques de séparation annulaires (16) s'étendant parallèlement à la base et ayant des rebords extérieurs (19) à une distance du corps et des rebords intérieurs (20), les disques de séparation et la base ayant des fentes annulaires circonférentielles (17, 18) dans une zone où les plaques tangentielles (8) sont fixées.

2. Appareil à tourbillon avec écoulement descendant de phases destiné à réaliser des processus physico-chimiques selon la revendication 1, **caractérisé en ce que** ledit séparateur (10) est sous la forme d'une coque tronconique, un diamètre d'une découpe inférieure de ladite coque étant de 0,75 à 0,9 d'un diamètre intérieur dudit dispositif de contact à tourbillon (6).

3. Appareil à tourbillon avec écoulement descendant de phases destiné à réaliser des processus physico-chimiques selon l'une quelconque des revendications 1, 2, **caractérisé en ce qu'**un nombre de dispositifs de contact à tourbillon (6) est de 1 à 3, une distance entre la base supérieure (7) dudit dispositif de contact à tourbillon (6) et la découpe inférieure dudit séparateur (10) d'un dispositif de contact à tourbillon (6) au-dessus étant de 0,3 à 1,0 dudit diamètre intérieur dudit dispositif de contact à tourbillon (6).

4. Utilisation dudit appareil à tourbillon selon l'une quelconque des revendications 1 à 3, pour l'absorption du trioxyde de soufre lors de la production d'acide sulfurique.

5. Utilisation selon la revendication 4, dans laquelle la phase gazeuse (G) est à un débit élevé de G = 40 à 260 x 10³ m³/h, le rapport massique du débit de liquide (L) sur le débit de gaz (G) étant L/G = 8 à 10.

6. Utilisation selon la revendication 5, dans laquelle le gaz entrant comprend de 7 à 14% de trioxyde de soufre à 280°C et le liquide est de l'acide sulfurique délivré dans le distributeur de liquide (22), atomisé par des buses (24), sous la forme de gouttelettes finement dispersées dans l'écoulement de gaz, en ayant ainsi un écoulement de gaz tourbillonnant dans la zone de mélange (4) mélangé aux gouttelettes finement dispersées du liquide ; et une partie des gouttelettes atomisées du liquide (L) précipite sur la base supérieure du dispositif en contact (7) tandis que la partie principale du liquide précipité s'écoule vers le bas à travers une fente annulaire (17) sur des disques de séparation annulaires horizontaux (16), en formant ainsi un rideau de liquide ; et une partie restante de liquide s'écoule par-dessus un bourrelet annulaire (21) et s'écoule vers le bas le long d'une surface extérieure du dispositif de contact à tourbillon (6) en formant ainsi également un rideau de liquide, de telle sorte que l'écoulement gaz-liquide passe à travers deux rideaux de liquide tandis que, quand l'écoulement de gaz passe entre des plaques tangentielles (8), il est subdivisé en plusieurs écoulements par les disques de séparation (16).
